# FASCICULE DE BREVET EUROPEEN

(11) **EP 1 543 692 B1**
(45) Date de publication et mention de la délivrance du brevet: **13.02.2013**
(21) Numéro de dépôt: 03780269.1
(22) Date de dépôt: 19.09.2003
(51) Int. Cl.: H04W 48/18

(54) **PROCEDE DE PERCEPTION DE SIGNAUX DE PARAMETRES DE RESEAU PAR UN TELEPHONE MOBILE FONCTIONNANT EN MODE DUAL**
VERFAHREN ZUM EMPFANG VON NETZWERKPARAMETERN DURCH EIN DUALMODE-MOBILTELEFON
METHOD OF RECEIVING NETWORK PARAMETER SIGNALS VIA A MOBILE TELEPHONE OPERATING IN DUAL MODE

(30) Priorité: 24.09.2002 FR 0211806
(43) Date de publication de la demande: 22.06.2005
(73) Titulaire: Apple Inc., Cupertino, CA 95014 (US)
(72) Inventeur: GARCIN, Thierry, F-75015 PARIS (FR)
(74) Mandataire: Lang, Johannes
(86) Numéro de dépôt international: PCT/FR2003/050056
(87) Numéro de publication internationale: WO 2004/030388

(56) Documents cités:
- EP-A2- 0 889 661
- WO-A-00/59255
- US-B1- 6 308 068

## Description

La présente invention a pour objet un procédé de réception de signaux de paramètres de réseau par un téléphone mobile fonctionnant en mode dual. Un mode dual s'entend principalement dans l'invention pour des téléphones mobiles susceptibles de fonctionner selon la norme GSM (et/ou DCS) et selon la norme UMTS. Mais il pourrait aussi concerner des appareils fonctionnant en GSM et en DECT, ou en au moins deux des normes parmi les normes suivantes GSM, UMTS, AMPS, PCS, CDPD, DCT, DECT, ISM, JCT etc.. De tels signaux de paramètres sont normalement transmis par des stations de bases d'un réseau de téléphonie mobile et sont destinés à permettre aux téléphones mobiles en relation avec ces stations de base de se caler en fréquence, en temps et en organisation, en respectant des contraintes qui elles-mêmes sont dictées par la pérennité du réseau.

L'invention concerne de préférence des terminaux ne pouvant traiter qu'un seul signal à la fois. Cependant elle pourrait aussi s'appliquer à des terminaux possédant deux circuits radios et/ou deux unités de traitement

Dans de tels réseaux, on emploie un cadencement des émissions et des réceptions selon un mode de trame, chaque trame pouvant en particulier être divisée en fenêtres temporelles. Dans le mode dit GSM en particulier, la durée d'une trame comportant huit fenêtres temporelles est d'environ 4,615 ms. Dans le mode UMTS, bien que la transmission soit continue en mode UTRA-FDD, un cadencement de 10 ms exactement est institué. En mode UMTS, de type UTRA-TDD, il y a en outre quinze fenêtres temporelles par trame de 10 ms.

Dans le mode GSM, avec un accès multiple à répartition en fréquence, FDMA dans la littérature anglo-saxonne, des canaux de fréquence de largueur étroite, dans la pratique de 200 KHz, sont institués et, contigus les uns aux autres, forment la totalité de la bande. Dans le mode UMTS, un accès multiple à répartition par le code, CDMA en littérature anglo-saxonne, est institué. Il conduit à des canaux de largueur plus grande, en pratique un multiple d'une bande de base de 100 KHz. Typiquement 12 sous bandes de 5 MHz conduisent à une bande utile de 60 MHz en UMTS, de type WCDMA, CDMA large bande. Que la transmission se fasse ou non avec agilité en fréquence, le calage des récepteurs sur la fréquence et le calage temporel d'émission sont des contraintes particulièrement sévères. Les mêmes contraintes valent pour les systèmes à répartitions par la fréquence ou à répartition par le code. Cette contrainte impose une précision de calage en fréquence des oscillateurs (synthétiseurs) et de calage en temps des récepteurs des téléphones mobiles voisine de quelques parties par million seulement.

Traditionnellement, les systèmes de téléphonie mobile de type GSM emploient des canaux de trafic, par lesquels sont transmises des informations ou des données que se communiquent mutuellement les usagers, et des canaux de balise par lesquels les réseaux de téléphonie mobile transmettent une signalisation aux téléphones mobiles, notamment sur l'état du réseau. Dans le mode UMTS, pour une sous bande, ces canaux sont définis par des codes de canalisation prédéterminés de multiplication des bits transmis.

Lors de la mise en service d'un téléphone mobile, lors de son démarrage, ce téléphone mobile doit reconnaître son environnement pour reconnaître quelle station de base est dans son voisinage, afin de signaler sa présence au réseau. Pour un téléphone en mode dual, il doit y avoir deux reconnaissances et deux signalements. Toutefois, si les réseaux sont associés, un seul signalement au réseau peut être nécessaire. Dans ce cas on parle de sous réseaux. Par exemple le signalement peut concerner le sous réseau radio UTRAN ou le sous réseau GSM. Dans la suite de cet exposé, on parler de réseaux, qu'ils soient associés ou non comme sous réseaux d'un réseau. Dans le cas d'une association, un réseau est généralement formé d'une partie coeur et d'une partie radio.

Avec l'invention on verra qu'il sera possible qu'un téléphone dual accepte un mode particulier, du type premier trouvé, ou préférentiel, imposant un démarrage avec un signalement préférentiel sur un réseau particulier.

Un téléphone mobile qui est en relation avec une station de base, soit en campement lorsqu'il est en veille, soit en transmission de données lorsqu'il utilise le réseau pour transmettre et recevoir, doit par ailleurs surveiller des stations de base voisines de cette station de base. Cette surveillance consiste à mesurer pour chacune de ces stations de base voisine la qualité de la réception qu'il perçoit, et à transmettre des informations correspondantes à sa station de base (par exemple sur son propre canal de trafic). De cette manière, cette station de base peut organiser la mobilité du téléphone mobile, c'est-à-dire faire assurer la communication par une autre station de base lorsque des conditions de transmission de cette station de base avec ce téléphone mobile deviennent insuffisantes.

Dans le domaine du GSM ou de l'UMTS, et plus généralement de la téléphonie mobile, les signaux échangés entre une station de base et un téléphone mobile servent principalement à moduler une fréquence porteuse Fp pour transporter des données éditées par les utilisateurs. La fréquence Fp est choisie parmi un ensemble de fréquences porteuses utilisables pour une telle liaison. D'autre part, des signaux de signalisation servent à indiquer au téléphone mobile qu'elles seront une fréquence Fp, ou un code Cp, sur lesquels il aura à converser quand ce téléphone mobile sera appelé.

En GSM, pour une voix fréquentielle Fp, on constitue un canal en partageant le temps alloué à un utilisateur et à un ou plusieurs autres, selon un mode dit TDMA dans la littérature angle saxonne. Dans ce cas, on constitue des fenêtres temporelles. Dans le cas du GSM en particulier, la durée d'une telle fenêtre temporelle est de 577 microsecondes. Pour des fenêtres temporelles successives, différents canaux sont ainsi constitués qui permettent différentes communications, réunissant différents interlocuteurs et leur permettant de converser entre eux. Dans la pratique on constitue ainsi des trames avec un certain nombre de fenêtres temporelles. Dans un exemple où il y a huit fenêtres temporelles par trame, la durée d'une trame est de 4,615 millisecondes. Le rang d'une fenêtre temporelle dans la trame est aussi une des indications qui doivent être données au téléphone mobile dans les signaux de signalisation pour lui dire comment doivent s'échanger les différentes informations entre lui et l'interlocuteur qui l'appelle.

Dans le mode dit GPRS, General Packet Radio Service, service général de transmission de paquets du mode GSM, plutôt que de n'accorder qu'une fenêtre temporelle par trame au téléphone mobile pour recevoir des données de la station de base, on prévoit que le mode de transmission sera déséquilibré. Par exemple au cours d'une trame, un certain nombre de fenêtres temporelles consécutives sont consacrées à la réception et un nombre plus restreint de fenêtres temporelles sont consacrées à l'émission par le téléphone mobile. Un tel mode déséquilibré est justifié notamment pour une consultation de type Internet dans laquelle les questions sont courtes, mais dans laquelle les réponses provenant du réseau Internet sont longues (transmission d'image en particulier). Dans le mode UMTS, un déséquilibre est aussi possible en allouant à un téléphone mobile un ensemble de séquences de décodage plus important en voie descendante qu'en voie montante. Les paramètres de ces déséquilibres sont aussi des paramètres de réseau à transmettre au téléphone mobile.

En GSM, en plus d'un canal de trafic, fréquence Fp, fenêtre q, alloués à un téléphone mobile en relation avec une station de base, cette station de base doit émettre un signal à une fréquence balise Fb. Le signal modulant la fréquence balise Fb comporte la signalisation qui permet au téléphone mobile, notamment, de venir aux renseignements auprès de cette station de base pour savoir si son état de veille peut être perpétué pendant une séquence supplémentaire, ou s'il fait l'objet d'un appel entrant qui lui est destiné. L'aérien de la station de base est capable d'émettre en même temps les signaux de signalisation à la fréquence Fb et les signaux de communication eux-mêmes aux fréquences Fp.

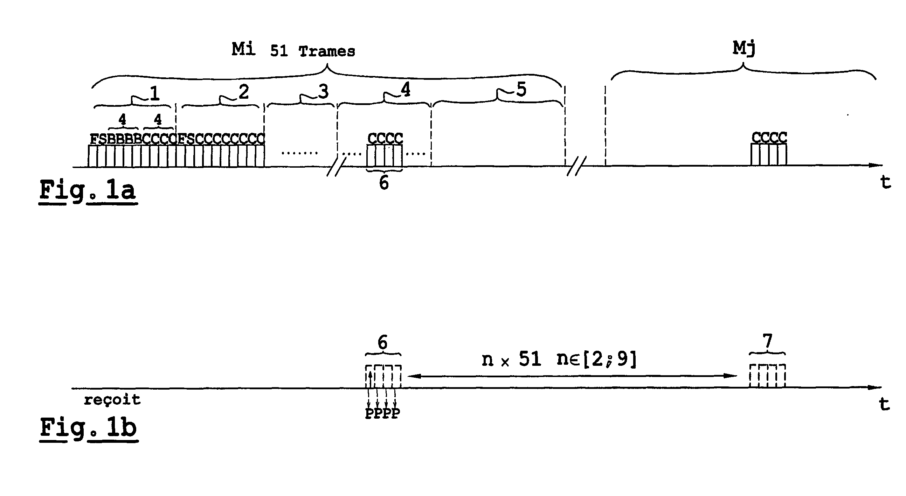

Dans le canal de balise qui en pratique est constitué de la même façon qu'un canal de trafic pour des paroles ou des données, on réalise des trames et des fenêtres temporelles dans ces trames. Pour organiser la mise en service et aussi la veille des téléphones mobiles, figure 1a, on prévoit que des signaux de paramètres disponibles sur la voie de balise comportent un motif d'une multitrame répétée toutes les 51 trames, c'est-à-dire approximativement toutes les 235 millisecondes. Ce motif de multitrame comporte cinq groupements de dix ou onze trames. Un premier groupement 1 de ce motif est différent des groupements suivants 2 à 5. Il comporte dans chacune des dix trames qui le compose, respectivement, des signaux dits FCCH, SCH, BCCH et CCCH. Ces signaux sont ici symbolisés par les lettres F, S, B et C en face respectivement des trames auxquelles ils appartiennent. Sur le plan pratique sur la figure 1a, bien que les émissions ne se produisent que pendant la première fenêtre temporelle dite TS0 d'une trame, on les a représentées par des fenêtres temporelles correspondant à la trame entière.

Les signaux FCCH signifient Frequency Control CHannel, ce qui se traduit par Canal de Fréquence. Ils correspondent en fait à une émission d'une porteuse Fb (des signaux de signalisation) modulée par une sinusoïde pure à 67,7 KHz du centre du canal. Cette émission dure pendant toute la fenêtre temporelle. Un téléphone mobile qui vient d'être allumé peut ainsi rechercher un signal qui module la fréquence Fb. Ceci lui est facilité par le fait que la porteuse Fb est émis à un niveau plus élevé en puissance que les autres signaux échangés par une station de base avec un quelconque des téléphones mobiles de son entourage. Dans ce but il est connu qu'un téléphone mobile doive se lancer, au moment de son allumage puis par la suite régulièrement pour la surveillance, dans une procédure de scrutation des fréquences porteuses de balise et rechercher celles pour laquelle il reçoit un signal le plus élevé.

Alors que des fréquences porteuses Fp de canaux de trafic sont soumises à une agilité de fréquence, d'une fenêtre temporelle à une autre, la fréquence de balise Fb est maintenue constante. Il suffit donc pour le mobile d'écouter toutes les dix trames, ou toutes les onze trames selon le cas, quelle est la fréquence Fb qu'il reçoit le plus.

Une fois que cette fréquence Fb est identifiée, dans une trame suivante, mais pour une fenêtre de même rang, le téléphone mobile reçoit un signal de signalisation SCH pour Synchronous CHannel qui veut dire Canal de Synchronisation. Les signaux SCH comportent, pour ce qui concerne un aspect de l'invention, une séquence d'apprentissage sur 64 bits permettant un calage temporel fin (inférieur à une microseconde), et des données renseignant sur un numéro de trame (RFN sur 22 bits, dont 11 bits pour référencer une supertrame dans une hypertrame, 5 bits pour référencer une multitrame dans la supertrame et 3 bits pour référencer un rang du signal S reçu parmi les cinq groupements de 10 ou 11 trames dans la multitrame à 51 trames), et une couleur BSIC de station de base.

En outre, les multitrames à 51 trames sont organisées deux groupes périodiques de 4 multitrames : les multitrames M0, M1, M2, M3, et M4, M5, M6, M7.

Le premier groupement 1 de 10 trames d'une multitrame comporte ensuite un groupe de quatre fenêtres temporelles B, associées dans quatre trames successives, et qui transportent des signaux de type BCCH pour Broadcast Control CHannel dont la signification est canal de contrôle de la diffusion. Les informations contenues dans ces signaux BCCH sont d'une part, dans les multitrames M0 et M1 ou M4 et M5, des informations dites de type S13 et S14 nécessaires pour que le téléphone mobile rende parfaite sa reconnaissance d'un réseau. Les informations S13 et S14 renseignent notamment sur l'identité du réseau (de l'opérateur) qui les diffuse. Les informations contenues dans ces signaux BCCH sont d'autre part, entre autres, la désignation d'une périodicité d'écoute imposée à un téléphone mobile pour savoir quand lui seront envoyés les éventuels signaux l'informant de ce qu'il est sujet à un appel entrant. La périodicité de cette écoute imposée, dans le cadre du GSM, est comprise entre deux fois et neuf fois le motif de 51 trames. Autrement dit une fois que dans ce motif de 51 trames un canal aura été alloué à un téléphone mobile (lequel canal comportera quatre fenêtres temporelles dans quatre trames successives), le téléphone mobile devra être à l'écoute de ces quatre fenêtres temporelles toutes les n fois 51 trames, n étant compris entre deux et neuf. Bien entendu, les informations de signalisation BCCH indiquent également quelles sont les quatre fenêtres temporelles qui lui sont dédiées pour lui faire-part de l'existence d'un tel appel.

Les signaux de signalisation BCCH S13 et S14 renseignent sur des paramètres de fonctionnement du téléphone mobile. Notamment, un téléphone mobile se trouvant situé dans un domaine de rayonnement d'une première station de base est susceptible de se déplacer dans un domaine contigu et gouverné par une autre station de base. Dans ses signaux de signalisation, la première station de base indique également au téléphone mobile quelles sont les cellules contiguës dont le téléphone mobile doit mesurer le niveau de réception de la fréquence balise. Par la suite, le téléphone mobile informe cette première station de base des niveaux de signaux de balise reçus en provenance de ces autres stations de base. En tous cas, cette information va bien entendu servir lorsque le mobile se déplacera pour que la communication ne soit plus assurée par la première station de base mais par une autre station de base contiguë.

Dans le premier motif 1 de dix trames, il y a ensuite quatre trames, donc quatre fenêtres temporelles TS0 en fait, dans lesquelles sont émis des signaux CCCH pour Control CHannel, signifiant canal de commande. Par opposition aux signaux de type BCCH qui sont écoutés par tous les téléphones mobiles situés sous la dépendance d'une station de base, des signaux CCCH ne sont écoutés que par un petit groupe de téléphones mobiles particuliers. Les groupements 2 à 4 de 10 trames suivant le groupement 1 comportent également des signaux FCCH et SCH en début de motif. Chacun comporte deux groupes de quatre fenêtres C avec des signaux CCCH attribués à des téléphones mobiles différents. Les signaux CCCH sont essentiellement destinés à contenir des signaux de type PCH Paging CHannel qui sont les signaux d'appel sur un canal d'appel. En définitive, pour un téléphone mobile l'essentiel est de savoir si dans les quatre fenêtres temporelles des signaux CCCH qui lui sont attribuées se trouvent, ou ne se trouvent pas, des signaux PCH l'informant de ce qu'il est sujet à un appel entrant ou non.

Toute cette procédure conduit un téléphone mobile qui se met en service, ou qui est en veille, à écouter au début du motif de 51 trames le signal FCCH et le signal SCH, ainsi que les quatre fenêtres temporelles des signaux BCCH des multitrames M0 et M1 ou M4 et M5. Puis le téléphone mobile prend rendez-vous temporel pour des signaux CCCH 6 qui lui sont plus particulièrement destinés. La figure 1b montre alors que le téléphone mobile 1 doit se mettre en écoute d'éventuels signaux PCH qui seraient émis pendant ce groupement 6. Si de tels signaux ne sont pas émis, parce que le téléphone mobile 1 n'est pas appelé, ce téléphone mobile doit se décaler jusqu'à un autre rendez-vous pour recevoir d'éventuels autres signaux PCH 7, qui le concernent et qui sont susceptibles d'être envoyés n fois 51 trames plus tard, n appartenant à un intervalle compris entre deux et neuf, n est notamment indiqué au téléphone mobile par le signal BCCH qu'il a reçu préalablement. Dans la pratique n dépend de la charge de la station de base. Si elle a affaire à peu de téléphones mobiles n vaudra deux. Si par contre elle à gérée un grand nombre de communications, jusqu'à 81 communications, alors n vaudra neuf.

Au moment où un téléphone mobile en mode dual est mis en service, et si son mode de mise en service est le mode GSM, il doit rechercher un signal F sur une fréquence de balise parmi un grand nombre de fréquences candidates. Une fois qu'un tel signal F est trouvé, et que la fréquence de balise est déterminée, dans la trame suivante, le téléphone mobile détecte un signal S, se synchronise précisément, et décode les informations de numéro de trame et de rang du signal S dans la multitrame. Rendu à ce stade, pour pouvoir mettre en oeuvre un protocole d'échange avec la station de base ainsi partiellement reconnue, les circuits du téléphone mobile doivent encore détecter les premiers signaux B qui permettent de parfaire la connaissance des paramètres de mise en relation du téléphone mobile avec la station de base.

Après cette acquisition, le téléphone mobile lance une procédure de connexion. Cette procédure comporte un envoi de message de demande de connexion à la station de base. Cette procédure comporte ensuite une acceptation par cette station de base et une réception de signaux d'allocation de canal de trafic par le téléphone mobile.

Une telle procédure est longue, notamment si le premier signal S détecté correspond au signal S du groupement 2 de 10 trames de la multitrame M1 ou M5. Si c'est le cas, le téléphone mobile ne peut rien faire avant de recevoir respectivement les signaux B contenu dans le groupement 1 de 10 trames de la multitrame à 51 trames respectivement M4 ou M0 suivante. De ce fait, la mise en service ou la recherche d'une autre station de base en cas de surveillance subit une attente de trois multitrame à 51 trames soit 3 x 51 x 4,615 , soit environ 700 ms. Une telle attente n'est en outre pas la seule attente car il reste encore à supporter la durée de la procédure de connexion.

Des précisions utiles dans ce domaine sont données par le livre "Réseaux GSM", de Xavier LAGRANGE, Philippe GODLEVSKI, et Sami TABANE, éditions Hermès Science, Paris, 5ème édition, 2000, pages 227 et suivantes.

Pour un téléphone mobile dual, alors que le deuxième mode est un mode UMTS, de type CDMA ou WCDMA ou autre, des deuxièmes signaux de paramètres sont aussi reçus régulièrement. Le téléphone mobile connaît a priori des modes de décodage et des séquences de décodage de type PSCH (Primary Synchronous CHannel - canal de synchronisation primaire) et SSCH (Secondary Synchronous CHannel - canal de synchronisation secondaire), qui sont les mêmes pour tous les réseaux, et qui permettent de multiplier des signaux radioélectriques reçus et démodulés pour acquérir par corrélation des informations comparables respectivement aux informations F, S et B ci-dessus en mode GSM. En pratique le codage PSCH permet de réaliser la synchronisation fenêtre (mais sans révéler le numéro ou le rang de la fenêtre). L'acquisition des signaux avec les codages SSCH sur quinze fenêtres suivantes permet de déterminer la position dans le temps de la fenêtre TS0. Mais à ce stade on ne connaît pas encore le numéro de trame système SFN (System Frame Number). Pour le connaître, il faut encore détecter et lire les premières trames d'un canal physique P-CCPCH (Primary Common Control CHannel - canal primaire de commande commun). De fait les signaux FCCH et SCH en GSM renseignent plus complètement que les signaux PSCH et SSCH en UMTS.

A cet effet, ces signaux sont complétés par un signal dit CPICH, Common Pilot CHannel - Canal physique commun dans le cadre de l'UTRA-FDD. Ce signal CPICH permet d'extraire des symboles pilotes dans un calage temporel précis. Ces signaux de paramètres UMTS sont distribués pendant deux trames-durées successives de 10 ms exactement, qui elles-mêmes sont répétées après huit trames de 10 ms. Le canal P-CCPCH supporte un canal de transport BCH qui transporte des signaux MIB (Master Information Block - bloc d'information maître) et des signaux SIB (System Information Block - bloc d'information système). Ces signaux MIB et SIB sont équivalents aux signaux SIn (notammentSI3 et SI4) en GSM. Les signaux MIB s'étalent sur deux trames (20 ms) et sont répétés toutes les 80 ms. Les six trames entre ces répétitions peuvent transporter les signaux SI. La lecture des premières trames P-CCPCH permet de connaître le numéro SFN identifiant ces trames. Les signaux MIB sont diffusés par des trames de numéro SFN connus.

En mode UMTS, des chips, qui sont des signaux électriques ou radioélectriques résultant du produit d'un bit par une séquence binaire temporelle, sont débités au débit de 3,84 Mchips/s.

Dans un tel mode UMTS, où dans un exemple sur une bande de 60 MHz sont répartis 12 sous bandes de 5 MHz, le téléphone mobile doit donc chercher la fréquence centrale de chaque sous bande. Compte tenu d'écart possible en fréquence, il est admis que le téléphone mobile cherche à détecter des signaux à une fréquence centrale, ainsi qu'à des fréquences latérales décalées de la fréquence centrale testée de une ou plusieurs centaines de KHz. Dans un exemple, le téléphone mobile teste ainsi cinq fréquences par sous bande pour savoir si l'une d'elles correspond à une fréquence centrale de sous bande. Ce test, dont la durée dépend de la rapidité du corrélateur, dure au maximum 5 x 12 x 10 ms = 600 ms.

Une fois que la fréquence est trouvée, il reste encore au téléphone à rechercher avec les décodages PSCH et SSCH les signaux de paramètres utiles. Une attente supplémentaire maximale de 100 ms (attente de 80 ms et décodage pendant 20 ms) peut alors se présenter si la trame révélatrice de la bonne fréquence de sous bande est la trame juste suivant celle où les signaux utiles sont diffusés.

Des précisions utiles dans ce domaine sont données par le livre "UMTS", de Javier SANCHEZ, et Mamadou THIOUNE, éditions Hermès Science, Paris, 1ère édition, 2001, pages 346 et suivantes.

On constate que dans tous les cas, GSM ou UMTS en particulier, une durée non négligeable peut se présenter avant qu'un téléphone mobile n'accroche un réseau. Cette durée devient même humainement perceptible. Elle est pénalisante pour l'utilisateur.

Le document EP 0 889 661 A2 décrit un mécanisme dans lequel une station mobile tente d'acquérir des paramètres d'un premier réseau pendant une durée prédéterminée. Si cette durée est écoulée sans que les paramètres n'aient été acquis, la station mobile tente d'acquérir des paramètres d'un second réseau.

Le but de l'invention est d'améliorer la probabilité d'obtenir un temps minimal de détection de la présence d'un réseau dans le cas de terminaux en mode dual. Selon l'invention, ce but est atteint avec une procédure nouvelle de détection d'un réseau donné. Cette procédure nouvelle nécessite les opérations suivantes pour les différentes technologies supportées par le réseau recherché. On mesure des caractéristiques physiques en réception de signaux radioélectriques. Puis on acquiert différents types de synchronisation en fréquence et en temps. Enfin, on décode une information logique transportée par les signaux en bande de base.

Une telle succession de tâches est opérée en vue de détecter le réseau recherché. Les tâches sont liées à la technologie d'accès, en GSM les tâches seront notées Gx et en UMTS les tâches seront notées Ux.

En GSM, le processus de recherche de réseau se décompose en deux sous-processus successifs. On met en oeuvre un premier sous-processus de validation des fréquences candidates à la recherche parmi les fréquences à mesurer. Ce premier sous-processus comporte une suite de une ou plusieurs tâches G1(fgi, fgj). Un deuxième sous-processus suit et concerne la recherche de réseau sur les fréquences validées. Ce deuxième sous-processus comporte une suite de tâches G2(fgi) et G3(fgi).

La tâche G1(fgi, fgj) est une tâche asynchrone. Elle comporte la mesure des fréquences d'une bande donnée (fgi-fgj). La tâche G2(fgi) est une tâche asynchrone. Elle est une tentative d'acquisition de la synchronisation en fréquence et en temps par détection des canaux FCH et SCH et déduction d'une date Dg de diffusion d'un bloc d'information système (S13 ou S14) transportant l'identité nécessaire PLMN_Id du réseau (public land mobile network identification - indentité du réseau de téléphonie mobile public). La tâche G3(fgi) est une tâche synchrone à la date Dg. Elle comporte la lecture du PLMN_Id transporté par les blocs SI3 ou SI4

En UMTS, le processus de recherche de réseau se décompose en deux tâches. Une première tâche U1 (fui) est une tâche asynchrone. Elle est une tentative d'acquisition de la synchronisation en fréquence et en temps par la détection des canaux PSCH et SSCH suivie de l'acquisition d'un code de canalisation et de brouillage (scrambling code), par analyse du canal CPICH, et par déduction d'une date Du de diffusion du bloc d'information système (MIB) transportant l'identité PLMN_Id du réseau par analyse de premières trames du canal P-CCPCH pour extraire le numéro SFN courant. Une deuxième tâche U2(fui) est une tâche synchrone à la date Du. Elle comporte la lecture du PLMN-Id transporté par un bloc MIB.

Selon l'invention, en mode dual, le processus de recherche enchaîne les tâches ci-dessus en utilisant la ressource temps, et de préférence en fonction de priorités données en entrée. Cette utilisation de la ressource temps comporte alors la connaissance de la durée nécessaire pour réaliser une tâche et la comparaison de cette durée nécessaire à une durée d'attente mesurée compte tenu de l'avancement du processus. La durée d'attente est déduite de la date au temps présent, et de la date Dg ou Du de diffusion des informations recherchées. Si la durée d'attente dans un mode est alors supérieure à un seuil, on exécute cette tâche dans un autre mode Ce seuil peut correspondre à une durée nécessaire pour exécuter cette tâche dans un mode ou un autre. En outre, en cas de conflit, si la tâche dans l'autre mode dure plus que la durée d'attente, de préférence on peut arbitrer la tâche à faire en fonction d'une table de priorité.

Bien entendu, la recherche selon l'invention est aussi utilisée lorsque le téléphone mobile a perdu ses réseaux. Sans l'invention, on a pu mesurer que l'acquisition pouvait dans des pires cas durer 17 minutes.

L'invention a donc pour objet un procédé d'acquisition des paramètres réseaux d'un premier et d'un deuxième réseau de téléphonie mobile lors de la mise en service d'un téléphone mobile de type à mode dual, ou à la suite de la perte desdits réseaux par ledit téléphone mobile à mode dual, dans lequel :
- on cale le téléphone mobile sur un mode de réception du premier réseau et on acquiert des paramètres de ce premier réseau, puis
- on cale le téléphone mobile sur un mode de réception du deuxième réseau et on acquiert des paramètres de ce deuxième réseau,
caractérisé en ce que :
- on mesure pendant l'acquisition de paramètres initiaux du premier réseau une première durée d'attente (Dig) avant d'acquérir des paramètres ultérieurs de ce premier réseau,
- on compare cette première durée d'attente à un premier seuil, et
- si cette première durée d'attente est supérieure à ce premier seuil,
- on essaye d'acquérir, pendant une durée intercalaire partiellement commune avec cette première durée d'attente, des paramètres du deuxième réseau.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figures 1a et 1b : des représentations déjà commentées de la répartition des signaux de signalisation en mode GSM ;
- Figure 2 : des représentations du même type que celles des figures 1a et 1b pour mettre en évidence des durées d'attente au moment du démarrage ;
- Figure 3 : une représentation schématique d'un téléphone mobile apte à mettre oeuvre le procédé de l'invention ;
- Figure 4 : une représentation d'un mode préféré de mise en oeuvre du procédé de l'invention.

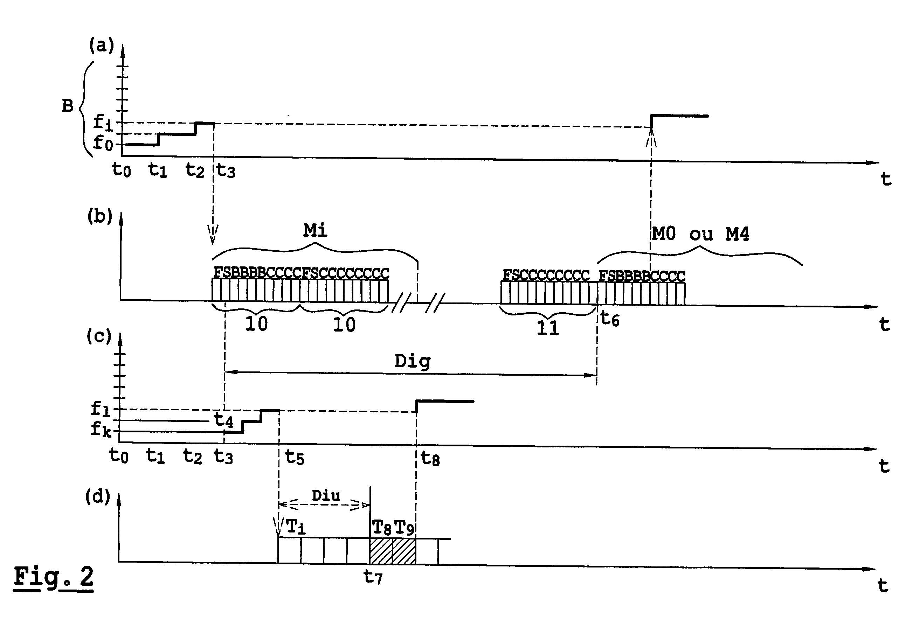

La figure 2, diagrammes (a) à (d) montrent, selon l'invention, les étapes de réception de signaux de signalisation du procédé d'acquisition des paramètres réseau. Par exemple, diagramme (a), au moment t0 de la mise en service du téléphone mobile, et si celui-ci doit démarrer en mode GSM, jusqu'à une date t1 le téléphone mobile teste, tâche G1, s'il reçoit un signal de balise à une fréquence f0. A la date t1, constatant l'échec, il essaye une fréquence contiguë, ou décalée selon un mode de recherche qui lui propre. Ainsi de suite, il arrive qu'à la date t2, en scrutant petit à petit la bande de fréquence utile, il trouve un signal correspondant à une fréquence fi et dont la première fenêtre de la première trame d'un groupement de dix trames de la multitrame Mi comporte le signal FCCH. A l'instant t3 pendant cette scrutation, le téléphone mobile va être capable de se caler sur la fréquence fi. On notera que les durées séparant les dates t0 et t1 ou t1 et t2 doivent être supérieures, pour chaque fréquence testée, à dix trames soit à 46 ms pour accéder à la fréquence de la balise détectée. Dans la trame suivante, diagramme (b), le téléphone mobile détecte le signal SCCH, permettant son calage fin ainsi que la détermination de la position, dans la multitrame Mi, du signal S ainsi détecté, et de la position de la multitrame Mi parmi l'ensemble des huit multitrames M0 à M7 auquel elle appartient.

Sur le diagramme (b), on a montré que, par chance, la trame Mi était une trame du type M0 ou M4. Elle comporte après le signal SCH, dans les quatre trames suivantes des signaux BCCH. Si c'est le cas, bien entendu le téléphone mobile acquiert très rapidement les informations d'identification de réseau PLMN. Il peut alors vérifier que ces informations de réseau correspondent à celle d'un réseau auquel il est affilié. En effet, des informations de ce type sont notamment connues dans une carte à puce montée dans le téléphone mobile et que ce dernier peut interroger. Si c'est le cas, si le réseau est le bon, le téléphone mobile lance alors une procédure de demande de connexion.

Si malheureusement la multitrame Mi n'est pas une multitrame M0 ou M4, mais une multitrame M2 ou M3, le téléphone mobile devra, à compter de la date t4 de ce constat attendre pendant une durée intercalaire Dig pour que survienne une multitrame M0 ou M4 dans laquelle seront présents les signaux BCCH utiles à la vérification de l'identité du réseau PLMN. On notera au passage qu'il n'est pas certain que le réseau soit un réseau auquel l'utilisateur du téléphone mobile s'est affilié. Dans le cas défavorable, une autre recherche devrait être tentée.

Dans l'invention on tire parti du fait que, rendu à la date t4, on sait qu'il faut attendre la durée Dig, dont la valeur peut être calculée. La valeur de la durée Dig dépend du rang du signal S mesuré dans la multitrame Mi. Pour simplifier, selon ce rang cette durée Dig sera une fois, deux fois ou trois fois 236 ms (51 x 4,615 ms). Compte tenu de cette durée longue, et en particulier si la recherche GSM n'est pas prioritaire, dans l'invention on préfère alors commuter le fonctionnement du téléphone mobile pour qu'il recherche un réseau selon l'autre mode, ici dans l'exemple préféré le mode UMTS. Ainsi après l'instant t4, diagramme (c), le téléphone mobile cherche à acquérir, dans une sous-bande donnée, et par un premier test de fréquence, une corrélation avec une fréquence centrale de sous-bande. En fonction de la vitesse du corrélateur, il peut ne pas être nécessaire d'attendre dans le cas présent la durée totale d'une trame de 10 ms pour tester les différentes fréquences.

Deux cas peuvent se produire, soit, aucune fréquence centrale de sous bande n'est trouvée avant la fin de la durée Dig. Dans ce cas le téléphone mobile retourne à la recherche en mode GSM. Soit, cas montré sur le diagramme (c), une fréquence centrale de sous-bande est trouvée par corrélation à une date t5 antérieure à une date t6 marquant la fin de la durée intercalaire Dig et au bout de laquelle, en théorie, le téléphone mobile devrait revenir à l'écoute du mode GSM pour détecter la multitrame M0 (ou M4). Selon ce qui a été indiqué précédemment, au cours de la première trame Ti en mode UMTS ainsi détecté, le téléphone mobile recherche par décodage des signaux reçus la position dans le temps de trames T8 et T9 qui contiennent les informations utiles à la connexion, notamment l'identification du réseau. Ce faisant le téléphone mobile connaît ainsi une deuxième durée intercalaire Diu entre la date présente et la date des trames T8 et T9.

Plusieurs cas peuvent se présenter selon que la durée Diu mène à une date t7 antérieure ou postérieure à la date t6 et selon par ailleurs que, dans le cas où elle est antérieure, les informations d'identification contenues dans les trames T8 et T9 correspondent à un réseau auquel le téléphone mobile peut s'affilier ou non.

Dans le cas où la date t7 est antérieure à la date t6, avec une antériorité supérieure à 20 ms, plus les temps de commutation, pour que le téléphone mobile puisse étudier le contenu des trames T8 et T9, le téléphone mobile reçoit et décode les signaux de ces trames T8 et T9. Il en extrait une information d'identité de réseau. Si l'identité de réseau est la bonne, alors, de préférence on attribuera à la tâche de mise en connexion avec le réseau UMTS une priorité grande, pour quelle provoque la connexion immédiate avec ce réseau, sauf si des contraintes économiques notamment propres à l'abonnement de l'utilisateur le prévoient différemment. Par contre, si ce n'est pas le cas à la date t8 à l'issue de laquelle l'identité de réseau a été rejetée, une nouvelle fréquence fl, diagramme (c), est scrutée. Et la recherche se perpétue comme entre les dates t4 et t5. Si, à l'approche de la date t6, la recherche sur le deuxième réseau n'a pas donné de résultat, le téléphone mobile commute selon le premier mode, le mode GSM pour acquérir les informations en mode GSM.

On préfère en effet privilégier le test en mode GSM, parce que les temps d'attente des durées intercalaires Dig dans le mode GSM sont plus pénalisants que les temps d'attente dans le mode UMTS. Il est donc préférable de scruter le plus fréquemment possible le mode pour lequel les temps d'attente sont les plus longs, de façon à ce que pendant les temps d'attente de ce mode lent on puisse scruter en entrelacement le mode plus rapide, ici le mode UMTS.

Pendant l'acquisition des paramètres initiaux F et S à la date t3 du premier mode, en GSM, on a mesuré la durée d'attente Dig. Elle est déduite des informations RFN extraites du signal SCH.

On a alors comparé cette durée d'attente Dig à un seuil. En pratique le seuil peut être un seuil fixe et arbitraire, par exemple le seuil peut être de 100 ms, lié à la durée maximale Diu d'acquisition des paramètres de réseau selon l'autre mode. Toutefois, entre la date t4 et la date t5 plusieurs tentatives ont été faites pour différentes fréquences. A titre de perfectionnement, à toutes les dates intermédiaires entre la date t4 et la date t5 pour lesquels un échec d'une tâche a été constaté, ici l'accrochage en fréquence sur une fréquence centrale de sous-bande, on comparera à titre de perfectionnement la durée d'attente, diminuée du temps passé à la tâche qui vient d'échouer, au seuil considéré, ici la durée Diu.

C'est ainsi qu'à la date t5, en fonction de ce qui est représenté, on a pu mener à bien l'étude du contenu des trames T8 et T9 pendant l'expiration de la durée Dig.

Ce faisant la notion de seuil (ou de durée d'attente) peut être définie de différentes manières. Soit la durée de seuil est arbitraire soit elle est liée à la tâche qui doit être exécutée dans l'autre mode, soit encore, à la place ou en complément, elle est modifiée au fur et à mesure (notamment ici en fonction des échecs intercalaires entre les dates t4 et t5).

Quand le seuil est fixé en fonction de la tâche à accomplir, il peut être fixé de deux façons. Soit il fixé en fonction d'une tâche arbitraire, ici la tâche consistant à acquérir les informations d'identité de réseau pendant les trames T8 et T9 et conduit alors à un seuil supérieur à Diu. Soit la durée du seuil est fixée en fonction de la tâche à entreprendre immédiatement dans l'autre mode, par exemple ici les recherches de fréquences centrales intercalaires entre les dates t4 et t5. Le principe étant que, dans tous les cas, si la durée d'attente Dig est inférieure au seuil, le téléphone mobile reste dans le premier mode et attend cette durée d'attente pour exécuter la tâche attendue dans le premier mode : ici la reconnaissance (ou non) de ce que les signaux de paramètres contenus dans les trames BBBB révèlent une identité convenable d'un opérateur de réseau de téléphonie mobile.

Le principe de l'invention est bien entendu réversible. Ainsi, si on a fixé le seuil en fonction de la tâche directement exécutable dans l'autre mode, ici la recherche des fréquences centrales entre les dates t4 et t5, il arrive, à la date t5, qu'une fréquence centrale soit reconnue. La reconnaissance de cette fréquence centrale crée, du fait même de la norme UMTS une deuxième durée d'attente Diu. Indépendamment alors du fait que la durée Diu peut être comprise dans la durée Dig, on peut vouloir, par un système de priorités, exécuter une des tâches préférentiellement à l'autre.

Le cas étudié maintenant est celui où la durée Diu dépasse le terme, à la date t6, de la durée Dig. Dans ce cas, on peut essayer d'acquérir, pendant une durée comprise dans la deuxième durée d'attente des paramètres du premier réseau. De préférence alors, on compare la fin de la première durée d'attente Dig à la fin de la durée Diu. Si l'écart est inférieur à un seuil on peut choisir d'acquérir les paramètres du réseau pour lequel la durée d'attente est la plus longue.

A la notion de préférence temporelle, qui imposerait dans le dernier cas l'abandon de la tâche de reconnaissance pendant les trames T8 et T9 (qui serait alors situées après la date t6), on ajoute toutefois une notion de priorité fonctionnelle qui peut se substituer à la priorité temporelle. On peut ainsi vouloir qu'en cas de conflit, un mode, par exemple le mode GSM, soit privilégié par rapport à un autre mode (pour des raisons notamment de gestion et de saturation du réseau). Chaque tâche ainsi effectuée peut recevoir une priorité et, en cas de conflit à l'issue de la durée d'attente, on peut choisir d'exécuter celle des deux tâches qui a le niveau de priorité le plus grand. Le choix prioritaire peut lui-même être lié à de nombreux critères, comme la durée de dépassement du terme de la première durée d'attente Dig. Par ailleurs, autant les priorités peuvent avoir une valeur figée, autant elles peuvent avoir une valeur dynamique, liée à l'état d'avance du processus. Par exemple on perçoit que si à l'issue des trames T8 et T9 l'identité de réseau a été satisfaisante mais que certaines autres informations manquent, on peut, compte tenu des grandes chances de succès de l'accrochage au réseau ainsi reconnu, attribuer une priorité plus grande à des tâches ultérieures permettant la connexion définitive à ce réseau.

Dans ces conditions, les durées intercalaires d'attente possèdent une durée au moins partiellement commune. Soit la partie est celle de la durée Dig soit celle de la durée Diu, soit les deux.

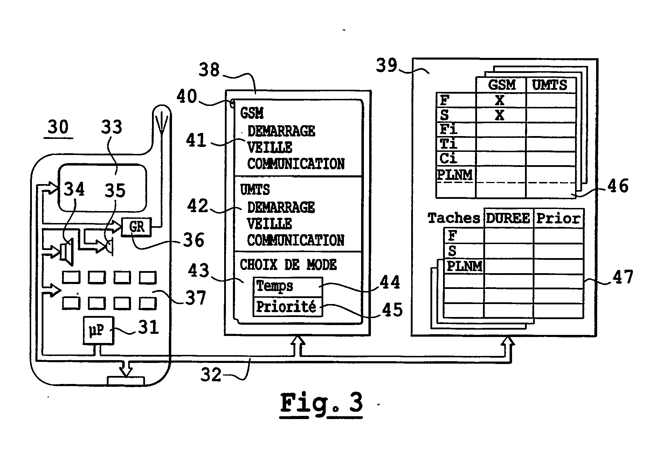

La figure 3 montre un téléphone mobile 30, d'un type classique utilisable pour mettre en oeuvre le procédé de l'invention. Ce téléphone mobile 30 comporte d'une manière classique un microprocesseur 31 en relation par l'intermédiaire d'un bus 32 de données, d'adresses et de commandes avec un écran 33, un haut-parleur 34, un microphone 35, un dispositif d'émission et réception radioélectrique 36, un clavier 37, une mémoire programme 38 et une mémoire de données 39. Cette représentation est symbolique. La mémoire programme 38 comporte un programme 40 comportant des programmes ou sous-programmes 41 et 42 de connexion à des réseaux selon deux modes distincts, ici par exemple un mode GSM et un mode UMTS. Les programmes 41 et 42 comportent des sous-programmes de démarrage, de veille et de communication, tant en mode de circuit qu'en mode paquet. Selon l'invention, le programme 40 comportera un sous-programme supplémentaire 43 de choix de mode avec un ensemble 44 d'instructions relatives à la gestion des temps d'attente, et de préférence un ensemble 45 d'instructions relatives aux priorités, fixes ou dynamiques, attribuées à chacune des tâches.

Dans la mémoire de données 39, en sus des différentes données de connexion habituelles, dans l'invention, on établit un état 46 d'avancement des acquisitions effectivement réalisées. Par exemple à la date t4, l'acquisition de la fréquence et du rang du signal S aura été effectuée. Par contre, la reconnaissance de l'identité du réseau n'aura pas été effectuée, ni bien sûr l'allocation de fréquences de trafic Fi et de fenêtres temporelles Ti. De même ne sont pas connues des lois de fréquence, des durées dites d'anticipation, timing advance TA, ainsi que tous les paramètres nécessaires au fonctionnement du téléphone mobile.

Dans le mode UMTS, à la date t4 rien n'est acquis. Petit à petit, les paramètres de réseau sont décodés et mémorisés. Le tableau 46 peut être mémorisé en plusieurs exemplaires, notamment pour correspondre à des stations de base voisines avec lesquelles le téléphone mobile est susceptible d'entrer en relation ou à des fréquences Fi pour lesquelles, en entrelacement, différentes acquisitions sont en cours. La mémoire de données 39 comporte également une table 47 des tâches dans laquelle chaque tâche est identifiée par sa nature et est en correspondance d'une information de durée de tâche ou de date d'activation et d'une information, optionnelle, de priorité. La table 47 comporte, par exemple à la date t3, la liste des tâches permettant la connexion à un éventuel réseau. La table 47 permet la gestion du seuil avec les dates enregistrées en regard de chaque colonne.

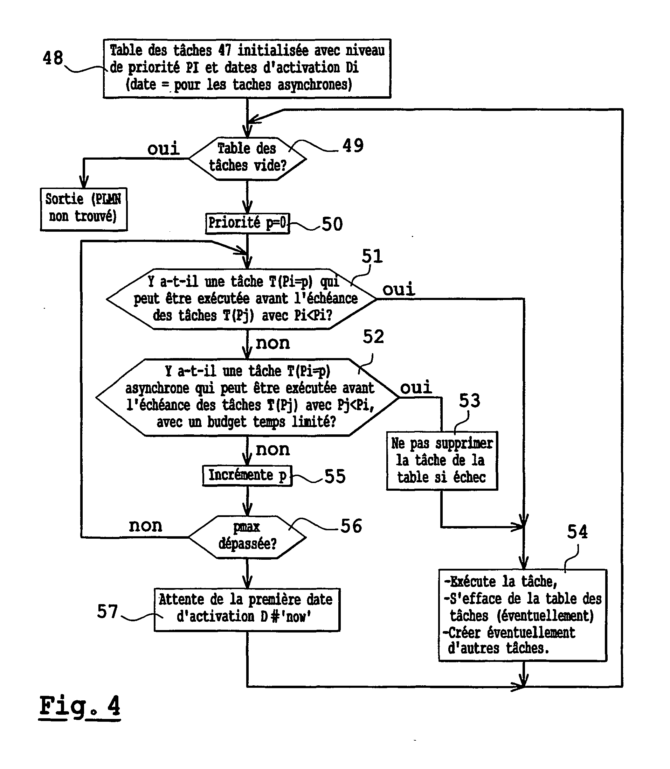

La figure 4 montre en détail le fonctionnement du sous-programme de priorité 45. Ce sous-programme 45 est un exemple de réalisation. Des niveaux de priorité ont été définis de 0 (haut) à 3 (bas) pour les tâches synchrones et asynchrones. Il concerne un cas d'utilisation avec le GSM comme priorité de sélection. Ce sous-programme 45 comporte une première instruction 48 dans laquelle la table des tâches 47 est initialisée avec un niveau de priorité et des dates d'activation. Pour les tâches asynchrones, typiquement à la date t3 la tâche F d'acquisition d'un signal de fréquence centrale, la date d'activation ou durée d'attente est 0. La table est néanmoins remplie avec toutes les tâches possibles, une tâche étant possible même si le résultat de la tâche conduit à un rejet de connexion (PLMN non conforme par exemple). Après l'instruction 48, un test 49 est lancé pour savoir si la table si la table 47 est vide. Si ce n'est pas le cas, une instruction 50 suivant le test 49 permet de fixer une variable courante de priorité p à la valeur 0. Dans la table 47, les priorités sont enregistrées en fonction d'un niveau désiré par le concepteur du système. Après l'instruction 50, un test 51 est lancé pour savoir s'il y a une tâche qui peut être exécutée avant l'échéance des tâches dont la priorité est inférieure à la priorité de la première tâche courante. En pratique, avant le test 51, les tâches dont la date est passée sont soit mises à jour avec une nouvelle date soit effacées et d'autres tâches sont éventuellement créées, en dynamique, si par ailleurs elles sont exécutables. Par exemple une tâche de connexion à un réseau n'est pas exécutable si l'identification du réseau détecté correspond à une identification interdite pour l'abonné.

Dans le cas où le test 51 est négatif, on lance un test 52 correspondant à la comparaison essentielle de l'invention selon laquelle on regarde s'il y a une tâche qui peut être exécutée avant l'échéance des tâches attendues, avec un budget limité. La différence avec le test 51 est que la tâche activée par le test 52 risque de ne pas aboutir car elle peut manquer de temps. Par exemple, si une tâche U1. de recherche d'une fréquence centrale en UMTS, suivie de la déduction de l'instant de la lecture du MIB peut prendre une valeur de 250 à 600 ms, alors cette tâche est activée par le test 51. Si l'attente est supérieure à 600 ms, elle peut également être activée par le test 52 si l'attente vaut, par exemple 500 ms, car la probabilité de réussite est élevée. Si la tâche U1 échoue, alors elle n'est pas effacée (53) et elle sera réactivée plus tard avec 600 ms. Typiquement on regarde si les détections des fréquences centrales en mode UMTS et/ou la recherche dans les trames T8 et T9 d'une identification de réseau peut être lancée. Si c'est le cas, d'une part on ne supprime pas au cours d'une instruction 53 la tâche dans la table 47 et d'autre part on exécute la tâche projetée puisque le budget de temps le permet. Au cours d'une instruction 54 suivante, on peut créer, d'une manière dynamique, dans la table 47, des tâches ultérieures éventuelles qui sont autorisées puisqu'une procédure initiale de connexion a réussi. A l'issue de l'exécution de l'instruction 54, on retourne au test 49.

Si le test 52 est négatif, dans le mode optionnel, on incrémente la valeur de la variable de priorité p au cours d'une instruction 55, on regarde par un test 56 si le seuil de cette variable de priorité n'est pas dépassé et s'il ne l'est pas on retourne au test 51. S'il est dépassé, par une instruction 57 on retourne en mode GSM pour exécuter la tâche à la date t6 de reconnaissance du réseau GSM.

## Revendications

1. Procédé d'acquisition des paramètres réseaux d'un premier et d'un deuxième réseau de téléphonie mobile avec un téléphone mobile de type à mode dual dans lequel :
- on cale le téléphone mobile sur un mode de réception du premier réseau,
- on cale le téléphone mobile sur un mode de réception du deuxième réseau,
- on mesure pendant l'acquisition de paramètres du premier réseau une première durée d'attente (Dig),
- on compare cette première durée d'attente à un premier seuil, et
- si cette première durée d'attente est supérieure à ce premier seuil,
- on essaye d'acquérir des paramètres du deuxième réseau,
**caractérisé en ce que** :
- on mesure pendant l'acquisition de paramètres initiaux du premier réseau la première durée d'attente (Dig) avant d'acquérir des paramètres ultérieurs de ce premier réseau,
- on essaye d'acquérir lesdits paramètres du deuxième réseau, pendant une durée intercalaire partiellement commune avec cette première durée d'attente.

2. Procédé selon la revendication 1, **caractérisé en ce que** :
- on mesure, pendant l'acquisition de paramètres initiaux du deuxième réseau, une deuxième durée d'attente (Diu) avant d'acquérir des paramètres ultérieurs de ce premier réseau,
- on compare cette deuxième durée d'attente à un deuxième seuil, et
- si cette deuxième durée d'attente est supérieure à ce deuxième seuil,
- on essaye d'acquérir, pendant une durée comprise dans cette deuxième durée d'attente, des paramètres du premier réseau.

3. Procédé selon la revendication 2, **caractérisé en ce que** :
- on compare la fin de la première durée d'attente à la fin de la deuxième durée d'attente, et si cette comparaison révèle un écart inférieur à un troisième seuil on choisit d'acquérir des paramètres du réseau pour lequel la durée d'attente est la plus longue.

4. Procédé selon l'une des revendications 1 à 3, **caractérisé en ce que** le premier réseau est un réseau de type GSM, le deuxième réseau étant un réseau de type UMTS.

5. Procédé selon l'une des revendications 1 à 4, **caractérisé en ce que** :
- on essaye d'acquérir des paramètres de réseau du deuxième réseau pendant une durée inférieure à un temps d'attente des paramètres du premier réseau.

6. Procédé selon l'une des revendications 1 à 5, **caractérisé en ce que** pour caler le téléphone mobile sur un mode de réception d'un réseau
- on cale le téléphone mobile en fréquence sur un mode de réception de ce réseau.

7. Procédé selon l'une des revendications 1 à 6, **caractérisé en ce que** le seuil dépend de la nature des paramètres initiaux déjà acquis.

## Claims

1. Method of acquiring network parameters of a first and a second mobile telephony network having a dual-mode type mobile telephone, comprising the followings steps:
- tuning the mobile telephone on a reception mode of the first network,
- tuning the mobile telephone on a reception mode of the second network,
- measuring, during the acquisition of parameters of the first network, a first waiting time duration (Dig),
- comparing this first waiting time duration with a first threshold, and
- if this first waiting time duration is larger than this first threshold,
- trying to obtain parameters of the second network,
**characterized by**:
- measuring, during the acquisition of initial parameters of the first network, the first waiting time duration (Dig), before acquiring subsequent parameters of this first network,
- trying to obtain said parameters of the second network during an intermediate time duration that is partially common to this first waiting time duration.

2. Method according to claim 1, **characterized by**:
- measuring, during the acquisition of the initial parameters of the second network, a second waiting time duration (Diu) before acquiring subsequent parameters of this first network,
- comparing this second waiting time duration with a second threshold, and
- if this second waiting time duration is larger than this second threshold,
- trying to acquire, during a time duration comprised within this second time duration, parameters of the first network.

3. Method according to claim 2, **characterized by**:
- comparing the end of the first waiting time period with the end of the second waiting time period, and, if this comparison reveals a difference that is smaller than a third threshold, choosing to acquire parameters of the network for which the waiting time duration is the largest.

4. Method according to one of claims 1 to 3, **characterized in that** the first network is a GSM type network, the second network being a UMTS type network.

5. Method according to one of claims 1 to 4, **characterized by**:
- trying to obtain network parameters of the second network during a time duration that is smaller than a waiting time duration of the parameters of the first network.

6. Method according to one of claims 1 to 5, **characterized in that**, in order to tune the mobile telephone on a reception mode of a network,
- the mobile telephone is frequency-tuned on a reception mode of this network.

7. Method according to one of claims 1 to 6, **characterized in that** the threshold depends on the nature of the already acquired initial parameters.

## Patentansprüche

1. Verfahren zum Erfassen der Netzwerkparameter eines ersten und eines zweiten Mobilfunknetzwerks mit einem Mobiltelefon des zweimodigen Typs, umfassend die folgenden Schritte:
- Abstimmen des Mobiltelefons auf einen Empfangsmodus des ersten Netzwerks,
- Abstimmen des Mobiltelefons auf einen Empfangsmodus des zweiten Netzwerks,
- Messen einer ersten Wartedauer (Dig) während des Erfassens der Parameter des ersten Netzwerks,
- Vergleichen dieser ersten Wartedauer mit einem ersten Schwellwert, und
- wenn diese erste Wartedauer größer als dieser erste Schwellwert ist,
- Versuchen, Parameter des zweiten Netzwerks zu erfassen, **gekennzeichnet durch**:
- Messen der ersten Wartedauer (Dig) während des Erfassens von anfänglichen Parametern des ersten Netzwerks vor dem Erfassen von späteren Parametern dieses ersten Netzwerks,
- Versuchen, die Parameter des zweiten Netzwerks während einer Zwischenzeitdauer zu erfassen, die teilweise gemeinsam mit dieser ersten Wartedauer ist.

2. Verfahren nach Anspruch 1, **gekennzeichnet durch**:
- Messen einer zweiten Wartedauer (Diu) während des Erfassens von anfänglichen Parametern des zweiten Netzwerks vor dem Erfassen von späteren Parametern dieses ersten Netzwerks,
- Vergleichen dieser zweiten Wartedauer mit einem zweiten Schwellwert, und
- wenn diese zweite Wartedauer größer als dieser zweite Schwellwert ist,
- Versuchen, während einer Zeitdauer innerhalb dieser zweiten Wartedauer, Parameter des ersten Netzwerks zu erfassen.

3. Verfahren nach Anspruch 2, **gekennzeichnet durch**:
- Vergleichen des Endes der ersten Wartedauer mit dem Ende der zweiten Wartedauer, und, wenn dieser Vergleich eine Diskrepanz zeigt, die kleiner als ein dritter Schwellwert ist, Auswählen einer Erfassung von Parametern des Netzwerks, bei welchem die Wartedauer am längsten ist.

4. Verfahren nach einem der Ansprüche 1 bis 3, **dadurch gekennzeichnet, dass** das erste Netzwerk ein Netzwerk des GSM-Typs ist, wobei das zweite Netzwerk ein Netzwerk des UMTS-Typs ist.

5. Verfahren nach einem der Ansprüche 1 bis 4, **gekennzeichnet durch**:
- Versuchen, Netzwerkparameter des zweiten Netzwerks während einer Zeitdauer zu erfassen, die kleiner als eine Wartedauer der Parameter des ersten Netzwerks ist.

6. Verfahren nach einem der Ansprüche 1 bis 5, **dadurch gekennzeichnet, dass**, um das Mobiltelefon auf einen Empfangsmodus eines Netzwerks abzustimmen,
- das Mobiltelefon frequenzmäßig auf einen Empfangsmodus dieses Netzwerks abgestimmt wird.

7. Verfahren nach einem der Ansprüche 1 bis 6, **dadurch gekennzeichnet, dass** der Schwellwert von der Natur der bereits erfassten anfänglichen Parameter abhängt.
